(19) **Europäisches Patentamt / European Patent Office / Office européen des brevets**

(11) **EP 4 093 015 A1**

(12) # EUROPEAN PATENT APPLICATION
published in accordance with Art. 153(4) EPC

(43) Date of publication:
**23.11.2022 Bulletin 2022/47**

(21) Application number: **20914860.0**

(22) Date of filing: **31.12.2020**

(51) International Patent Classification (IPC):
***H04N 5/232*** $^{(2006.01)}$

(86) International application number:
**PCT/CN2020/142422**

(87) International publication number:
**WO 2021/147650 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2020 CN 202010075364**

(71) Applicant: **GUANGDONG OPPO MOBILE TELECOMMUNICATIONS CORP., LTD.**
**Dongguan, Guangdong 523860 (CN)**

(72) Inventor: **JIN, Yue**
**Dongguan, Guangdong 523860 (CN)**

(74) Representative: **Trichard, Louis et al**
**Venner Shipley LLP**
**200 Aldersgate**
**London EC1A 4HD (GB)**

(54) **PHOTOGRAPHING METHOD AND APPARATUS, STORAGE MEDIUM, AND ELECTRONIC DEVICE**

(57) The present application discloses a photographing method and apparatus, a storage medium, and an electronic device. The method comprises: performing key point detection on a human body in a photography scene, so as to obtain a set of body key points; determining a set of composition key points corresponding to the photography scene; if the set of body key points does not match the set of composition key points, generating and outputting a prompt message; and when a set of real-time body key points matches the set of composition key points, photographing the photography scene to obtain a target image.

```
┌─────────────────────────────────────────────────────────┐
│ Perform a key point detection on a human body in a        │── 101
│ photographing scene to obtain a human body key point      │
│ set of the human body.                                    │
└─────────────────────────────────────────────────────────┘
                          │
                          ▼
┌─────────────────────────────────────────────────────────┐
│ Determine a composition key point set corresponding to    │── 102
│ the photographing scene.                                  │
└─────────────────────────────────────────────────────────┘
                          │
                          ▼
┌─────────────────────────────────────────────────────────┐
│ In response to the human body key point set not matching  │── 103
│ the composition key point set, generate and output a      │
│ prompt message to adjust an attitude of the electronic    │
│ device.                                                   │
└─────────────────────────────────────────────────────────┘
                          │
                          ▼
┌─────────────────────────────────────────────────────────┐
│ In response to the human body key point set matching the  │── 104
│ composition key point set, perform a photographing        │
│ operation on the photographing scene to obtain a target   │
│ image.                                                    │
└─────────────────────────────────────────────────────────┘
```

Fig. 1

EP 4 093 015 A1

**Description**

CROSS REFERENCE OF RELATED APPLICATION

This application claims priority to Chinese Application No. 202010075364.1, filed on January 22, 2020. The entire disclosure of the above application is incorporated herein by reference.

FIELD OF THE DISCLOSURE

The present disclosure relates to an electronic technique, and more particularly, to a photographing method, a photographing device, a storage medium and an electronic device.

BACKGROUND

As the progress of the development of the electronic device, the definition of the camera in the electronic device, such as a smart phone, becomes higher. Therefore, more and more users tend to use the electronic device, such as a smart phone, to take pictures. In order to meet this demand, the device providers upgrade the hardware of the electronic device to further increase the definition of the electronic device. However, in order to obtain a high quality picture, not only the camera with a higher definition is required, but also the user needs to have a certain level of photographing skills, such as have skills of using reasonable composition of a picture.

SUMMARY

One objective of an embodiment of the present disclosure is to provide a photographing method, a photographing device, a storage medium and an electronic device to raise the image quality.

According to an embodiment of the present disclosure, a photographing method used in an electronic device is disclosed. The photographing method comprises:

performing a key point detection on a human body in a photographing scene to obtain a human body key point set of the human body;
determining a composition key point set corresponding to the photographing scene;
upon a condition that the human body key point set does not match the composition key point set, generating and outputting a prompt message to adjust an attitude of the electronic device;
upon a condition that the human body key point set matches the composition key point set, performing a photographing operation on the photographing scene to obtain a target image.

According to an embodiment of the present disclosure, a photographing device, used in an electronic device, is disclosed. The photographing device comprises:

a detecting module, configured to perform a key point detection on a human body in a photographing scene to obtain a human body key point set of the human body;
a determining module, configured to determine a composition key point set corresponding to the photographing scene;
a generating module, configured to generate and output a prompt message to adjust an attitude of the electronic device upon a condition that the human body key point set does not match the composition key point set;
a photographing module, configured to perform a photographing operation on the photographing scene to obtain a target image upon a condition that the human body key point set matches the composition key point set.

According to an embodiment of the present disclosure, a storage medium is disclosed. The storage medium stores a computer program. The computer program is configured to be executed by a computer to perform the above-mentioned photographing method.

According to an embodiment of the present disclosure, an electronic device is disclosed. The electronic device comprises: a processor; and a storage device, storing a computer program; wherein the processor is configured to execute the computer program stored in the storage device to perform the above-mentioned photographing method.

BRIEF DESCRIPTION OF THE DRAWINGS

The above and/or additional aspects and advantages of the present application will become apparent and readily understood from the following description of embodiments taken in conjunction with the accompanying drawings.

Fig. 1 is a flow chart of a photographing method according to one embodiment of the present disclosure.
Fig. 2 is a flow chart of a photographing method according to another embodiment of the present disclosure.
Fig. 3 is a diagram of a preview image G1 according to another embodiment of the present disclosure.
Fig. 4 is a diagram of a human body boundary frame B1 according to an embodiment of the present disclosure.
Fig. 5 is a diagram of a human body image G2 according to an embodiment of the present disclosure.
Fig. 6 is a diagram of a prompt message according to an embodiment of the present disclosure.
Fig. 7 is a diagram of a target image G3 according to an embodiment of the present disclosure.
Fig. 8 is a diagram of a photographing device according to an embodiment of the present disclosure.
Fig. 9 is a diagram of an electronic device according to an embodiment of the present disclosure.
Fig. 10 is a diagram of an electronic device according to an embodiment of the present disclosure.
Fig. 11 is a diagram of an image processing circuit according to an embodiment of the present disclosure.

DETAILED DESCRIPTION

Please refer to the drawings, where the same component symbols represent the same components, and the principles of the present disclosure are exemplified by being implemented in a suitable computing environment. The terminologies in the embodiments of the present disclosure are merely for describing the purpose of the certain embodiment, but not to limit the disclosure.
According to one embodiment of the present disclosure, a photographing method used in an electronic device comprises:

performing a key point detection on a human body in a photographing scene to obtain a human body key point set of the human body;

determining a composition key point set corresponding to the photographing scene;

in response to the human body key point set not matching the composition key point set, generating and outputting a prompt message to adjust an attitude of the electronic device;

in response to the human body key point set matching the composition key point set, performing a photographing operation on the photographing scene to obtain a target image.

Optionally, the step of performing the key point detection on the human body in the photographing scene to obtain the key point set of the human body comprises:

obtaining a preview image of the photographing scene;

utilizing a portrait detection model to perform a portrait detection on the preview image to obtain a human body boundary frame;

cutting the preview image based on the human body boundary frame to obtain a human body image; and

utilizing a key point detection model to perform the key point detection on the human body image to obtain the human body key point set of the human body.

Optionally, the step of determining the composition key point set corresponding to the photographing scene comprises:

dividing the preview image into a foreground image and a background image;
determining a plurality of candidate key point sets corresponding to the background image;
determining a human body type of the human body; and
determining, from the plurality of candidate key point sets, at least one of candidate key point sets that is corresponding to the human body type as the composition key point set corresponding to the photographing scene.

Optionally, the photographing method further comprises:

in response to multiple of the candidate key point sets correspond to the human body type, obtaining a composition boundary frame according to each of the multiple of candidate key point sets corresponding to the human body type; and

determining at least one of the multiple of candidate key point sets, where the composition boundary frame corresponding to the at least one of the multiple of candidate key point matches the human body boundary frame, as the composite key point set corresponding to the photographing scene.

Optionally, after the step of determining the composition key point set corresponding to the photographing scene, the photographing method further comprises:

calculating a distance between each human body key point and its corresponding composition key point to obtain a plurality of distances; and
calculating an average distance of the plurality of distances.

The human body key point set not matching the composition key point set comprises: the average distance being greater than or equal to a predetermined average distance.
Optionally, the step of generating and outputting the prompt message to adjust the attitude of the electronic device comprises:

generating a plurality of candidate vectors;
predicting a target human body key point set obtained after adjusting the attitude of the electronic device according to each of the candidate vectors;
determining a candidate vector of the plurality of candidate vectors as a target vector, where the target human body key point set corresponding to the candidate vector matches the composition key point set; and

generating and outputting the prompt message to adjust the attitude of the electronic device according to the target vector.

Optionally, after the step of determining the composition key point set corresponding to the photographing scene, the photographing method further comprises:

determining a human face key point set from the human body key point set;
obtaining a horizontal coordinate of each human face key point to obtain a plurality of first horizontal coordinates;
calculating a first average value of the plurality of first horizontal coordinates; and
in response to the first average value being within a predetermined range, determining a target composition key point set corresponding to the human face key point set from the composition key point set.

The human body key point set not matching the composition key point set comprises: the human face key point set not matching the target composition key point set.

Optionally, after the step of determining the target composition key point set corresponding to the human face key point set from the composition key point set, the photographing method further comprises:

obtaining a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates;
calculating a second average value of the plurality of first vertical coordinates, a third average value of the plurality of first vertical coordinates and a fourth average value of the plurality of second horizontal coordinates;
determining a first target coordinate according to the first average value and the second average value and determining a second target coordinate according to the third average value and the fourth average value; and
calculating a first distance between the first target coordinate and the second target coordinate.

The human body key point set not matching the composition key point set comprises: the first distance being greater than or equal to a first predetermined distance.

Optionally, after the step of calculating the first average value of the plurality of horizontal coordinates, the photographing method further comprises:

in response to the first average not within the predetermined range, detecting whether the human body key point set has a predetermined key point;
in response to the human body key point set not having a predetermined key point, obtaining a first center coordinate of the human body boundary frame and a second center coordinate of the composition boundary frame corresponding to the composition key point set;
calculating a second distance between the first center coordinate and the second center coordinate.

The human body key point set not matching the composition key point set comprises: the second distance being greater than or equal to a second predetermined distance.

Optionally, after the step of detecting whether the human body key point set has the predetermined key point, the photographing method further comprises:

in response to the human key point set having the predetermined key point, obtaining a first center horizontal coordinate of the human body boundary frame and a second center horizontal coordinate of the composition boundary frame corresponding to the composition key point set;
determining a target composition key point set corresponding to the human face key point set from the composition key point set;
obtaining a vertical coordinate of each human face key point to obtain a plurality of third vertical coordinates and obtaining a vertical coordinate of each composition key point to obtain a plurality of fourth vertical coordinates;
calculating a fifth average value of the plurality of third vertical coordinates and a sixth average value of the plurality of fourth vertical coordinates;
determining a third target coordinate according to the first center horizontal coordinate and the fifth average value and determining a fourth target coordinate according to the second center horizontal coordinate and the sixth average value;
calculating a third distance between the third target coordinate and the fourth target coordinate.

The human body key point set not matching the composition key point set comprises: the third distance being greater than or equal to a third predetermined distance.

It can be understood that, the embodiments of the present disclosure may be performed by an electronic device such as a smart phone or a tablet computer.

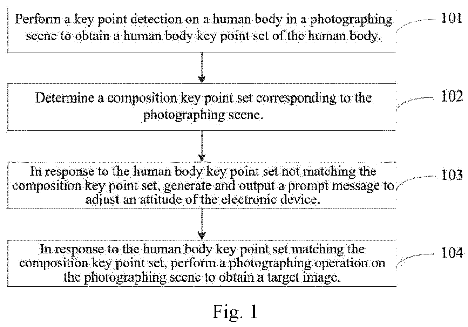

Please refer to Fig. 1. Fig. 1 is a flow chart of a photographing method according to a first embodiment of the present disclosure. The photographing method comprises blocks 101-104.

Block 101: performing a key point detection on a human body in a photographing scene to obtain a human body key point set of the human body.

For example, the electronic device could obtain a preview image of the photographing scene. And then, the electronic device could determine a human body boundary frame from the preview image. And then, the electronic device could cut the preview image to generate a human body image based on the human body boundary frame. At last, the electronic device could perform the key point detection on the human body image to obtain the human body key point set of the human body in the photographing scene. Here, the human body key point set could comprise one or more human body key points, including a nose, a left eye, a right eye, a left ear, a right ear, a neck, a left shoulder, a right shoulder, a left elbow, a right elbow, a left wrist, a right wrist, a left buttock, a right buttock, a left knee, a right knee, a left ankle and a right ankle.

Here, after the electronic device activates a photographing application based on the user's operation (such as an application "camera" in the electronic device), the scene that camera is aiming is the photographing scene. For example, the user uses his finger to click the icon of the "camera" application on the screen of the electronic device. Then, the user uses the camera of the electronic device to aim a certain scene, the scene is the photographing scene. From the above, a person having ordinary skills in the art could understand that the photographing scene does not mean a specific scene. Instead, the photographing scene represents a scene that the camera is currently aiming.

Block 102: determining a composition key point set corresponding to the photographing scene.

For example, the electronic device could have different candidate key point sets with reasonable compositions. The candidate key point set could correspond to the background image. Here, one background image could correspond to multiple candidate key point sets. Each candidate key point set could comprise one or more candidate body key points, including a nose, a left eye, a right eye, a left ear, a right ear, a neck, a left shoulder, a right shoulder, a left elbow, a right elbow, a left wrist, a right wrist, a left buttock, a right buttock, a left knee, a right knee, a left ankle and a right ankle.

In an embodiment, the electronic device could divide the preview image of the photographing scene into a foreground image and a background image. And then, the electronic device could obtain a plurality of candidate key point sets corresponding to the background image and determine one of the plurality of candidate key point sets as the composition key point set corresponding to the photographing scene.

Here, the foreground image could be an image having a "human", a "cat", or a "dog". The background image could be an image including a "mountain" view, a "water" view, an "ocean" view, or a "snow" view.

For example, the composition key point set corresponding to the photographing scene could be a candidate key point set identical to or similar to the human body key point set in the plurality of candidate key point sets corresponding to the background image. For instance, assume that the human body key point set comprises 8 key points including a nose, a left eye, a right eye, a left ear, a right ear, a neck, a left shoulder, and a right shoulder. If the multiple candidate key point sets corresponding to the background image of the photographing scene has a candidate key point set, which includes only the 8 key points of a nose, a left eye, a right eye, a left ear, a right ear, a neck, a left shoulder, and a right shoulder, then the electronic could determine that the candidate key point set is identical to the human body key point set and thus determine the candidate key point set as the composition key point set corresponding to the photographing scene. If multiple candidate key point sets all have a candidate key point set, which includes not only 8 key points of a nose, a left eye, a right eye, a left ear, a right ear, a neck, a left shoulder and a right shoulder but also other key points such as a left elbow and a right elbow, then the electronic device could determine that the candidate key point set is similar to the human body key point set and thus could determine the candidate key point set as the composition key point set corresponding to the photographing scene.

Block 103: upon a condition that the human body key point set does not match the composition key point set, generating and outputting a prompt message to adjust an attitude of the electronic device.

For example, after obtaining the human body key point set and the composition key point set, the electronic device could determine whether the human body key point set matches the composition key point set. Under the condition that the human body key point set does not match the composition key point set, the electronic device generates and outputs a prompt message to adjust an attitude of the electronic device such that the current human body key point set of the human body matches the composition key point set.

As the change of the attitude of the electronic device, the photographing scene changes accordingly. As the change of the photographing scene, the key point detection is performed on the human body in the photographing scene and the positions of the human body key points in the human body key point set change. The changing human body key points, having changing positions, are the current human body key points and the key point set including these changing human body key points is the current human body key point set.

For example, when determining whether the human body key point set matches the composition key point set, the electronic device could calculate the distance between each human body key point and its corresponding composition key point to obtain a plurality of distances. And then, the electronic device could calculate an average distance of the plurality of distances. Upon a condition that the average distance is greater than or equal to a predetermined average distance, the electronic device determines that the human body key point set does not match the composition key point set. Here, upon a condition that the human body key point is a nose, its corresponding key point is also a nose. Upon a condition that the human body key point is a left shoulder its corresponding key point is also a left shoulder.

Furthermore, when determining whether the human body key point set matches the composition key point set, the electronic device could determine the human face key point set from the human body key point set and determine a target composition key point set corresponding to the human key point set from the composition key point set. Upon a condition that the human face does not match the target composition key point set, the electronic device could determine that the human body key point set does not match the composition key pint set.

In addition, when determining whether the human body key point set matches the composition key point set, the electronic device could determine an average value A1 of horizontal coordinates and an average value A2 of vertical coordinates of a plurality of human body key points included in the human body key point set and determine an average value A3 of horizontal coordinates and an average value A4 of vertical coordinates of a plurality of composition body key points included in the composition key point set. Then, the electronic device could determine a first coordinate according to the average value A1 and the average value A2. Here, the average value A1 could be the horizontal coordinate of the first coordinate and the average value A2 could be the vertical coordinate of the first coordinate. In addition, the electronic device could determine a second coordinate according to the average value A3 and the average value A4. Here, the average value A3 could be the horizontal coordinate of the second coordinate and the average value A4 could be the vertical coordinate of the second coordinate. And then, the electronic device could calculate the distance between the first coordinate and the second coordinate. Upon a condition that the distance between the first coordinate and the second coordinate is greater than or equal to a predetermined distance, the electronic device could determine that the human body key point set does not match the composition key point set. In this embodiment, the horizontal coordinates and the vertical coordinates of the human body key points, the horizontal coordinates and the vertical coordinates of the composition key points, the first coordinate and the second coordinate are all coordinates in the screen coordinate system.

Block 104: upon a condition that the human body key point set matches the composition key point set, performing a photographing operation on the photographing scene to obtain a target image.

In an embodiment, under the condition that the current human body key point set matches the composition key point set, the electronic device could perform a photographing operation on the photographing scene to obtain an image, which meets certain aesthetical rules and has a reasonable composition. Or, under the condition that the current human body key point set matches the composition key point set, the electronic device could generate a prompt message to remind the user to take a picture of the photographing scene. Accordingly, the user could click the "shot" button in the camera application to take a picture of the photographing scene to obtain a target image that meets certain aesthetical rules.

It could be understood that the electronic device could directly take a picture of the photographing scene to obtain a target image that meets certain aesthetical rules and has a reasonable composition if the human body key point set matches the composition key point set.

In this embodiment, through obtaining the human body key point set of the human body in the photographing scene and determining the composition key point set having a reasonable composition and corresponding to the photographing scene, the preview image corresponding to the photographing scene could be ensured to have a reasonable composition when the human body key point set matches the composition key point set. When the human body key point set does not match the composition key point set, a prompt message is to adjust an attitude of the electronic device is generated and outputted such that the current preview image of the photographing scene could become to have a reasonable composition. In this way, a image having a reasonable composition could be obtained and thus the image quality could be raised.

In one embodiment, the step of "performing a key point detection on a human body in a photographing scene to obtain a human body key point set of the human body" comprises:

    (1) obtaining a preview image of the photographing scene;
    (2) utilizing a portrait detection model to perform a portrait detection on the preview image to obtain a human body boundary frame;
    (3) cutting the preview image based on the human body boundary frame to obtain a human body image; and
    (4) utilizing a key point detection model to perform the human body key point detection on the human body image to obtain the key point set of the human body.

For example, the electronic device could obtain a preview image of the photographing scene and identify the item in the preview image to determine whether the preview image has a human body. Upon a condition that the preview image has a human body, the electronic device could utilize a predetermined portrait detection model to perform a portrait detection on the preview image to obtain a human body boundary frame. The electronic device could cut the preview image based on the human body boundary frame to obtain a human body image. The electronic device could utilize a predetermined key point detection model to perform the key point detection on the human body image to obtain the human body key point set of the human body in the preview image.

Upon a condition that the preview image does not have a human body or have multiple human bodies, the electronic device could finish the flow.

In an embodiment, the step of "determining the composition key point set corresponding to the photographing scene" comprises:

(1) dividing the preview image into a foreground image and a background image;
(2) determining a plurality of candidate key point sets corresponding to the background image;
(3) determining a human body type of the human body; and
(4) determining at least one of the plurality of candidate key point sets that is corresponding to the human body type as the composition key point set corresponding to the photographing scene.

For example, the electronic device could utilize a predetermined scene identification model to perform a scene identification on the preview image to obtain a scene identification result. The electronic device could divide the preview image into a foreground image and a background image according to the scene identification result. The scene identification result could comprise a foreground tag and a background tag of an image. The electronic device could divide the preview image into the foreground image and the background image according to the foreground tag and the background tag.

Here, the foreground tag is used to describe an item that is in an apparent position of the preview image and could be labeled by a rectangular frame. The background tag is used to describe an overall information of the preview image. For example, the background tag could be "mountain view", "water view", "snow view" or "rain view". The foreground tag could be "human", "cat" or "dog". For example, for a preview image showing a person standing beside a lake, the foreground tag could be "human' and the background tag could be "water view." Accordingly, the foreground image could be an image having a "human" image and the background image could be a "water view" image.

It should be noted that the electronic device could pre-store a plurality of predetermined background images and have a plurality of candidate key point sets corresponding to the predetermined background images. Here, the predetermined background images could include a "water view" image, a "mountain view" image, a "snow view" image, etc. Each candidate key point set could comprise one or more candidate key points, including a nose, a left eye, a right eye, a left ear, a right ear, a neck, a left shoulder, a right shoulder, a left elbow, a right elbow, a left wrist, a right wrist, a left buttock, a right buttock, a left knee, a right knee, a left ankle and a right ankle.

After dividing the preview image into the foreground image and the background image, the electronic device could obtain a plurality of preview background images. And then, the electronic device could determine whether the plurality of preview background images have one preview background image matching the background image. Here, assume that the background image is a "water view" image and the preview background images also have one "water view" image. In this case, the electronic device could determine that the plurality of preview background images have at least one preview background image matching the background image. When determining that the plurality of preview background images have at least one preview background image matching the background image, the electronic device could obtain multiple candidate key point sets corresponding to the predetermined background image matching the background image and take them as the multiple candidate key point sets corresponding to the background image. And then, the electronic device could determine the human body type of the human body in the photographing scene. And then, the electronic device could determine at least one candidate key point set corresponding to the human body type from the plurality of candidate key point sets as the composition key point set corresponding to the photographing scene.

It could be understood that when the electronic device sets a different candidate key point set for each predetermined background image, the electronic device could further set a type for each candidate key point set corresponding to each preview background image. For example, if a certain candidate key point set comprises key points higher than the human chest, including a nose, a left eye, a right eye, a left ear, a right ear, a neck, a left shoulder, and a right shoulder, the electronic device could determine that the type of the candidate key point set is a bust type. If a certain candidate key point set comprises key points of the entire human body, including a nose, a left eye, a right eye, a left ear, a right ear, a neck, a left shoulder, a right shoulder, a left elbow, a right elbow, a left wrist, a right wrist, a left butt, a right butt, a left knee, a right knee, a left ankle and a right ankle, the electronic device could determine that the type of the candidate key point set is a full-length portrait type. After determining the human body type, the electronic device could obtain the type corresponding to each candidate key point set corresponding to the background image to obtain a plurality of types. And then, the electronic device could determine a type matching the human body type from the plurality of types and determine the candidate key point set corresponding to the type matching the human body type as the candidate key point set corresponding to the human body type. For example, assume the human body type is the full-length portrait type and the plurality of types comprise the bust type and the full-length portrait type. Then, the electronic device could determine the candidate key point set corresponding to the full-length portrait type of the plurality of types as the candidate key point set corresponding to the human body type.

In an embodiment, the photographing method could further comprise:

(1) upon a condition that multiple of candidate key point sets correspond to the human body type, obtaining a composition boundary frame according to each of the multiple of candidate key point sets corresponding to the human body type; and
(2) determining at least one of the multiple of candidate key point sets, where the composition boundary frame corresponding to the at least one of the multiple of the plurality of candidate key point matches the human body boundary frame, as the composite key point set corresponding to the photographing scene.

There can be multiple candidate key point sets corresponding to the human body type. For example, the human body type is the full-length portrait type and the candidate key point set K1 and the candidate key point set K2 both correspond to the full-length portrait type. The only difference between the candidate key point set K1 and the candidate key point set K2 is that the candidate key point set K1 and the candidate key point set K2 have candidate key points located in different positions in the screen coordinate system. In this case, the candidate key point set corresponding to the human body type comprises the candidate key point set K1 and the candidate key point set K2.

In this embodiment, when the electronic device sets different candidate key point sets for each predetermined background image, the electronic device could set different composition boundary frames for each predetermined background images. Here, each candidate key point set corresponds to a composition boundary frame. When the human body type corresponds to multiple candidate key point sets, for the candidate composition key point set corresponding to each human body type, the electronic device could obtain its corresponding composition boundary frame. And then, the electronic device could determine a candidate key point set matching the human body boundary frame from the multiple candidate key point sets corresponding to the human body type as the composition key point set corresponding to the photographing scene.

Upon a condition that the difference between the height of the composition boundary frame corresponding to a certain candidate key point set and the height of the human body boundary frame is within a first predetermined difference range and the difference between the width of the composition boundary frame corresponding to a certain candidate key point set and the width of the human body boundary frame is within a second predetermined difference range, the electronic device could determine that the composition boundary frame corresponding to the candidate key point set matches the human boundary frame. Here, the first predetermined difference range and the second predetermined difference range could be pre-stored in the electronic device.

In some embodiments, when a plurality of candidate key point sets from the candidates key point sets corresponding to the human body type matching the human body boundary frame are determined as first candidate key point sets, the electronic device could further obtain the left top corner coordinate of the composition boundary frame corresponding to each first candidate key point set and the left top corner coordinate of the human body boundary frame. Furthermore, the electronic device determines at least one first candidate key point set whose composition boundary frame has a left top corner coordinate identical to the left top corner coordinate of the human body boundary frame, as the composition key point set corresponding to the photographing scene.

In some other embodiments, when a plurality of first candidate key point sets, whose composition boundary frames have a left top corner coordinate identical to the left top corner coordinate of the human body boundary frame, as the second candidate key point set, the electronic device could further obtain the right bottom corner coordinate of the composition boundary frame corresponding to each second candidate key point set and the right bottom corner coordinate of the human body boundary frame. Furthermore, the electronic device determines at least one second candidate key point set whose composition boundary frame has a right bottom coordinate identical to the right bottom corner coordinate of the human body boundary frame, as the composition key point set corresponding to the photographing scene.

In some embodiments, the electronic device could pre-store a composition database. The composition database could be defined as a hash table. The hash table is a data structure that can map keys to values. A hash table uses a hash function to compute an index, also called a hash code, into an array of buckets or slots, from which the desired value can be found. During lookup, the key is hashed and the resulting hash indicates where the corresponding value is stored. In the composition database, the keys represents each predetermined preview image, such as the "water view" image, the "mountain view" image, the "snow view" image, etc. The values represent the candidate key point set and the composition boundary frame corresponding to each predetermined background image. Here, each candidate key point set corresponding to each preview background image corresponds to a composition boundary frame corresponding to each preview background image.

In the actual implementation, after the electronic device divides the preview image into the foreground image and the background image, the electronic device could obtain a preview background image matching the background image. If the background image is a "water view" image and the preview background image matching the background image is also a "water view" image, the electronic device could take the preview background image matching the background image as a "key". The electronic device could use the key to look up a plurality of candidate key point sets and a plurality of composition boundary frames in the composition database and determine the plurality of candidate key point sets and the plurality of composition boundary frames as a plurality of candidate key point sets and a plurality of composition boundary frames corresponding to the background image.

In an embodiment, the photographing method could further comprise following steps after the step of "determining the composition key point set corresponding to the photographing scene":

(1) calculating a distance between each human body key point and its corresponding composition key point to obtain a plurality of distances; and

(2) calculating an average distance of the plurality of distances.

Here, the condition that the human body key point set does not match the composition key point set comprises: the average distance is greater than or equal to a predetermined average distance.

For example, assume that the human body key point set comprises: a node N1, a left eye LE1 and a right eye RE1 and the composition key point set comprises a nose N2, a left eye LE2 and a right eye RE2. The electronic device could calculate the distance L1 between the nose N1 and the nose N2, the distance L2 between the left eye LE1 and the left eye LE2, and the distance L3 between the right eye RE1 and the right eye RE2. And then, the electronic device could calculate an average distance of the distances L1, L2 and L3. Upon a condition that the average distance is greater than or equal to the average distance, the electronic device could determine that the human body key point set does not match the composition key point set. It should be noticed that when the average distance is less than the predetermined average distance, the electronic device could determine that the human body key point set matches the composition key point set. Here, the predetermined average distance could be pre-stored in the electronic device according to the actual implementation. There is no specific limitation here.

In an embodiment, the step of "generating and outputting the prompt message to adjust the attitude of the electronic device" comprises:

(1) generating a plurality of candidate vectors;

(2) predicting a target human body key point set obtained after adjusting the attitude of the electronic device according to each of the candidate vectors;

(3) determining a candidate vector of the plurality of candidate vectors as a target vector, wherein the target human body key point set corresponding to the candidate vector matches the composition key point set; and

(4) generating and outputting the prompt message to adjust the attitude of the electronic device according to the target vector.

For example, when the human body key point set does not match the composition key point set, the electronic device could randomly generate a plurality of candidate vectors. Here, each of the candidate vectors could comprise its amplitude and direction. For example, a candidate vector could have a one-centimeter amplitude and horizontally right direction. And then, the electronic device could predict a target human body key point set obtained after the electronic device's attitude is adjusted according to each candidate vector. For example, assume that a certain candidate vector has a one-centimeter amplitude and horizontally right direction. In this way, the electronic device could predict the target human body key point set obtained by performing the key point detection on the human body in the current photographing scene after the user moves the electronic device to the right by one centimeter. When the target human body key point set corresponding to a certain candidate vector matches the composition key point set, the electronic device could determine the candidate vector as the target vector. And then, the electronic device could generate and output the prompt message to adjust the attitude of the electronic device according to the target vector. For example, assume that the target vector has a one-centimeter amplitude and horizontally right direction. The electronic device could show "please move the electronic device to the right by one centimeter" on its display screen. Furthermore, the electronic device could further display a progress bar, which corresponds to the above-mentioned one centimeter. The progress bar could gradually become shorter as the electronic device moves to the right and become longer as the electronic device moves to the left. When the electronic device moves to the right by one centimeter, the progress bar is gone. Accordingly, the user could determine whether he has moved the electronic device to the right by one centimeter according to the progress bar.

In an embodiment, the photographing method could further comprise following steps after the step of "determining the composition key point set corresponding to the photographing scene":

(1) determining a human face key point set from the human body key point set;

(2) obtaining a horizontal coordinate of each human face key point to obtain a plurality of first horizontal coordinates;

(3) calculating a first average value of the plurality of first horizontal coordinates; and

(4) upon a condition that the first average value is within a predetermined range, determining a target composition key point set corresponding to the human face key point set from the composition key point set.

Here, the condition that the human body key point set does not match the composition key point set comprises: the human face key point set does not match the target composition key point set.

For example, when a partial human body key point set selected from the human body key point set meets a predetermined condition, the electronic device could determine whether the human body key point set matches the composition key point set based on whether the partial human body key point set matches a partial composition key point set in the composition key point set.

For example, after obtaining the human body key point set and the composition key point set, the electronic device could determine a human face key point set, such as the nose N1, the left eye LE1 and the right eye RE1, from the human body key point set. And then, the electronic device could obtain a horizontal coordinate of each human face key point in the screen coordinate system to obtain a plurality of first horizontal coordinates. And then, the electronic device could calculate a first average value of the plurality of first horizontal coordinates. Upon a condition that the first average value is within a predetermined range, the electronic device determines a target composition key point set, such as the nose N2, the left eye LE2 and the right eye RE2, corresponding to the human face key point set from the composition key point set. And then, the electronic device could determine whether the human face key point set matches the target composition key point set. If not, then the electronic device could determine that the human body key point set does not match the composition key point set. If yes, then the electronic device could determine that the human body key point set matches the composition key point set. The predetermined average range could be pre-stored in the electronic device according to actual implementations.

In an embodiment, the photographing method could further comprise following steps after the step of "determining the target composition key point set corresponding to the human face key point set from the composition key point set":

(1) obtaining a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates;

(2) calculating a second average value of the plurality of first vertical coordinates, a third average value of the plurality of first vertical coordinates and a fourth average value of the plurality of second horizontal coordinates;

(3) determining a first target coordinate according to the first average value and the second average value and determining a second target coordinate according to the third average value and the fourth average value; and

(4) calculating a first distance between the first target coordinate and the second target coordinate.

Here, the condition that the human body key point set does not match the composition key point set comprises: the first distance is greater than or equal to a first predetermined distance.

For example, assume that the human face key point set comprises a nose N1, a left eye LE1 and a right eye RE1; and the target composition key point set comprises a nose N2, a left eye LE2 and a right eye RE2. Assume that the nose N1 has a horizontal coordinate 1 and a vertical coordinate 2; the left eye LE1 has a horizontal coordinate 4 and a vertical coordinate 1; the right eye RE1 has a horizontal coordinate 4 and a vertical coordinate 3; the nose N2 has a horizontal coordinate 3 and a vertical coordinate 3, the left eye LE2 has a horizontal coordinate 6 and a vertical coordinate 2; the right eye RE2 has a horizontal coordinate 6 and a vertical coordinate 4; and the first predetermined distance is 2. In this case, the first average value is 3, the second average value is 2, the third average value is 5, and the fourth average value is 3. The first target coordinate is (3, 2) and the second target coordinate is (5, 3). The distance between the first target coordinate and the second coordinate is $\sqrt{5}$. From the above, it could be determined that the first distance is greater than the first predetermined distance. Therefore, the electronic device could determine that the human face key point set does not match the target composition key point set and further determined that the human body key point set does not match the composition key point set. Here, the nose N1, the left eye LE1, the right eye RE1, the nose N2, the left eye LE2, the right eye RE2 have their own horizontal and vertical coordinates in the screen coordinate system. The first predetermined distance could be pre-stored in the electronic device according to the actual implementations.

In an embodiment, the step of "generating and outputting the prompt message to adjust the attitude of the electronic device" comprises:

(1) determining a first moving direction according to a first target coordinate and a second target coordinate; and

(2) generating and outputting the prompt message to adjust the attitude of the electronic device according to the first moving direction and the first distance.

It could be understood that the first moving direction could be a direction from the first target coordinate to the second target coordinate. Assume that the first moving direction is a horizontal direction toward the right and the first distance is $\sqrt{5}$. Then, the electronic device could display "please move your electronic device to the right horizontally" on its display screen. Furthermore, the electronic device could display a progress bar on the display screen. The process bar corresponds to the first distance and could gradually become shorter as the electronic device moves to the right and become longer as the electronic device moves to the left. When the electronic device moves to the right by the first distance, the progress bar is gone. Accordingly, the user could determine whether to stop moving the electronic device according to the appearance of the progress bar.

In an embodiment, the photographing method could further comprise following steps after the step of "calculating the first average value of the plurality of first horizontal coordinates":

(1) upon a condition that the first average is not within the predetermined range, detecting whether the human body key point set has a predetermined key point;

(2) upon a condition that the human body key point set does not have a predetermined key point, obtaining a first center coordinate of the human body boundary frame and a second center coordinate of the composition boundary frame corresponding to the composition key point set; and

(3) calculating a second distance between the first center coordinate and the second center coordinate.

Here, the condition that the human body key point set does not match the composition key point set comprises: the second distance is greater than or equal to a second predetermined distance.

For example, upon a condition that the first average is not within the predetermined range, the electronic device could further detect whether the human body key point set has a predetermined key point. Upon a condition that the human body key point set does not have a predetermined key point, the electronic device could further obtain a center coordinate of the human boundary frame (a first center coordinate) and a center coordinate of the composition boundary frame (a second center coordinate) corresponding to the composition key point set. And then, the electronic device could calculate a second distance between the first center coordinate and the second center coordinate. Upon a condition that the second distance is greater than or equal to the second predetermined distance, the electronic device could determine that the human body key point set does not match the composition key point set. Upon a condition that the second distance is less than the second predetermined distance, the electronic device could determine that the human body key point set matches the composition key point set. Here, the first center coordinate and the second center coordinate are both coordinates in the screen coordinate system. The second predetermined distance could be pre-stored in the electronic device according to the actual implementations. The predetermined key points could comprise a left knee, a right knew, a left ankle and a right ankle.

For example, when the human body key point set does not have the predetermined key point and assume that the first center coordinate is (1, 1), the second center coordinate is (3, 3) and the second predetermined distance is 2, it could be determined that the second distance is $\sqrt{8}$, which is greater than the second predetermined distance. Therefore, the electronic device could determine that the human body key point set does not match the composition key point set.

In an embodiment, the step of "generating and outputting the prompt message to adjust the attitude of the electronic device" comprises:

(1) determining a second moving direction according to the first center coordinate and the second center coordinate; and
(2) generating and outputting the prompt message to adjust the attitude of the electronic device according to the second moving direction and the second distance.

The second moving direction could be a direction from the first target coordinate to the second target coordinate. Assume that the second moving direction is a horizontal direction toward the right and the first distance is $\sqrt{8}$. Then, the electronic device could display "please move your electronic device to the right horizontally" on its display screen. Furthermore, the electronic device could display a progress bar on the display screen. The process bar corresponds to the second distance and could gradually become shorter as the electronic device moves to the right and become longer as the electronic device moves to the left. When the electronic device moves to the right by the second distance, the progress bar is gone. Accordingly, the user could determine whether to stop moving the electronic device according to the appearance of the progress bar.

In an embodiment, the photographing method could further comprise following steps after the step of "detecting whether the human body key point set has a predetermined key point":

(1) upon a condition that the human key point set has the predetermined key point, obtaining a first center horizontal coordinate of the human body boundary frame and a second center horizontal coordinate of the composition boundary frame corresponding to the composition key point set;

(2) determining a target composition key point set corresponding to the human face key point set from the composition key point set;

(3) obtaining a vertical coordinate of each human face key point to obtain a plurality of third vertical coordinates and obtaining a vertical coordinate of each composition key point to obtain a plurality of fourth vertical coordinates;

(4) calculating a fifth average value of the plurality of third vertical coordinates and a sixth average value of the plurality of fourth vertical coordinates;

(5) determining a third target coordinate according to the first center horizontal coordinate and the fifth average value and determining a fourth target coordinate according to the second center horizontal coordinate and the sixth average value; and

(6) calculating a third distance between the third target coordinate and the fourth target coordinate;

Here, the condition that the human body key point set does not match the composition key point set comprises: the third distance is greater than or equal to a third predetermined distance.

For example, assume the human body key point set has the predetermined key point and the human face key point set comprises a nose N1, a left eye LE1 and a right eye RE1 and the target composition key point set comprises a nose N2, a left eye LE2 and a right eye RE2. Furthermore, assume that the nose N1 has a vertical coordinate 2; the left eye LE1 has a vertical coordinate 1; the right eye RE1 has a vertical coordinate 3; the nose N2 has a vertical coordinate 3, the left eye LE2 has a a vertical coordinate 2; the right eye RE2 has a vertical coordinate 4; the first center horizontal coordinate of the human body boundary frame is 2; the second center horizontal coordinate of the composition boundary frame of the composition key point set is 4; and the predetermined third distance is 2. In this case, the fifth average value is 2 and the sixth average value is 3. The third target coordinate is (2, 2) and the fourth target coordinate is (4, 3). The third distance between the third target coordinate and the fourth target coordinate is $\sqrt{5}$ . Thus, the third distance is greater than the third predetermined distance. In this way, the electronic device could determine that the human body key point set does not match the composition key point set. It could be understood that if the third distance is less than the predetermined distance, then the electronic device could determine that the human body key point set matches the composition key point set. Here, the first center horizontal coordinate of the human body boundary frame is the horizontal coordinate of the center of the human boundary frame in the screen coordinate system. The second center horizontal coordinate of the composition boundary frame corresponding to the composition key point set is the horizontal coordinate of the center of the composition boundary frame corresponding to the composition key point set in the screen coordinate system. The predetermined third distance could be pre-stored in the electronic device according to the actual implementations. The predetermined key points could comprise a left knee, a right knee, a left ankle and a right ankle.

In an embodiment, the step of "generating and outputting the prompt message to the attitude of the electronic device" comprises:

(1) determining a third direction according to the third target coordinate and the fourth target coordinate;

(2) generating and outputting the prompt message to adjust the attitude of the electronic device according to the third moving direction and the third distance.

It could be understood that the third moving direction could be a direction from the third target coordinate to the fourth target coordinate. Assume that the third moving direction is a horizontal direction toward the right and the third distance is $\sqrt{5}$ . Then, the electronic device could display "please move your electronic device to the right horizontally" on its display screen. Furthermore, the electronic device could display a progress bar on the display screen. The process bar corresponds to the third distance and could gradually become shorter as the electronic device moves to the right and become longer as the electronic device moves to the left. When the electronic device moves to the right by the third distance, the progress bar is gone. Accordingly, the user could determine whether to stop moving the electronic device according to the appearance of the progress bar.

In an embodiment, the photographing method could further comprise following steps before the step of "performing the key point detection on the human body in the photographing scene to obtain the human body key point set of the human body":

(1) detecting whether the electronic device is in a predetermined condition;

(2) upon a condition that the electronic device is in the predetermined condition, performing the key point detection on the human body in the photographing scene to obtain the human body key point set of the human body;

(3) upon a condition that the electronic device is not in the predetermined condition, generating and outputting a prompt message to adjust the attitude of the electronic device; and

(4) upon a condition that the adjusted electronic device is in the predetermined condition, performing the key point detection on the human body in the photographing scene to obtain the human body key point set of the human body.

For example, the predetermined condition could be a horizontal condition. In order to take a better picture, before performing the key point detection on the human body in the photographing scene to obtain the human body key point set of the human body, the electronic device could obtain the pitch and roll angles through the position sensor, such as a gyroscope. And then, the electronic device could determine whether it's in a horizontal condition according to the pitch and roll angles. If the pitch angle and the roll angle are both 180 degrees, the electronic device could determine that the electronic device is in the horizontal condition. And then, the electronic device could perform the key point detection on the human body in the photographing scene to obtain the human body key point set of the human body. If the pitch angle is not 180 degrees or the roll angle is not 180 degrees, the electronic device is not in the horizontal condition. The electronic device could generate and output a prompt message to adjust the attitude of the electronic device. For example, the prompt message could be "please adjust the electronic device to be in a horizontal condition." While the user is adjusting the attitude of the electronic device, the electronic device could keep detecting whether the pitch angle and the roll angle are both 180 degrees. When the pitch angle and the roll angle are both detected to be 180 degrees, the electronic device could generate a prompt message. The prompt message is used to tell the user to cease to adjust the attitude of the electronic device. After the electronic device is adjusted to be in the horizontal condition, the electronic device could perform the key point detection on the human body in the photographing scene to obtain the human body key point set of the human body.

In addition, the predetermined condition could be a vertical condition. In order to take a better picture, before performing the key point detection on the human body in the photographing scene to obtain the human body key point set of the human body, the electronic device could obtain the pitch and roll angles through the position sensor, such as a gyroscope. And then, the electronic device could determine whether it's in a vertical condition according to the pitch and roll angles. If the pitch angle and the roll angle are both 90 degrees, the electronic device could determine that the electronic device is in the vertical condition. And then, the electronic device could perform the key point detection on the human body in the photographing scene to obtain the human body key point set of the human body. If the pitch angle is not 90 degrees or the roll angle is not 90 degrees, the electronic device is not in the vertical condition. The electronic device could generate and output a prompt message to adjust the attitude of the electronic device. For example, the prompt message could be "please adjust the electronic device to be in a vertical condition." While the user is adjusting the attitude of the electronic device, the electronic device could keep detecting whether the pitch angle and the roll angle are both 90 degrees. When the pitch angle and the roll angle are both detected to be 90 degrees, the electronic device could generate a prompt message. The prompt message is used to tell the user to cease to adjust the attitude of the electronic device. After the electronic device is adjusted to be in the vertical condition, the electronic device could perform the key point detection on the human body in the photographing scene to obtain the human body key point set of the human body.

It could be understood that adjusting the attitude of the electronic device could make the electronic device in the horizontal condition or the vertical condition relative to the ground. In the actual implementation, adjusting the attitude of the electronic device could make the electronic device in a horizontal forward condition, a horizontal backward condition, a horizontal leftward condition, a horizontal rightward condition, a vertical upward condition, and a vertical downward condition relative to the user based on any position condition (including the horizontal condition and the vertical condition).

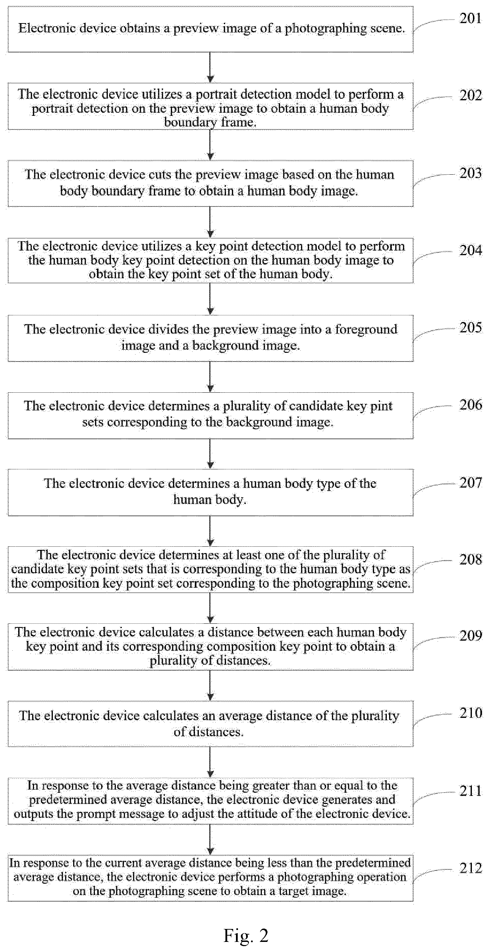

Please refer to Fig. 2. Fig. 2 is a flow chart of a photographing method according to another embodiment of the present disclosure. The photographing method could be performed by an electronic device. The photographing method comprises blocks 201-212.

Block 201: An electronic device obtains a preview image of a photographing scene.

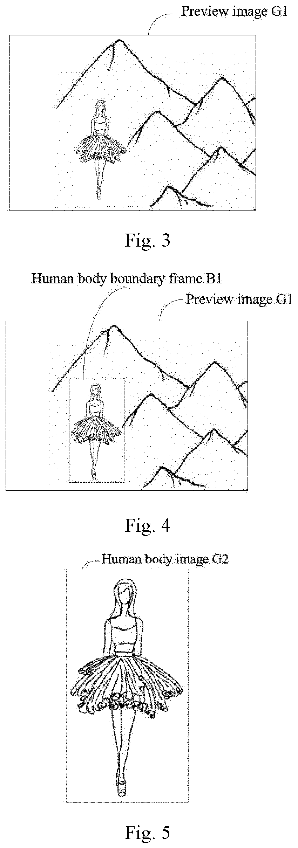

For example, as shown in Fig. 3, the electronic device could obtain a preview image G1 of the photographing scene.

Here, after the electronic device activates a photographing application based on the user's operation (such as an application "camera" in the electronic device), the scene that camera is aiming is the photographing scene.

Block 202: The electronic device utilizes a portrait detection model to perform a portrait detection on the preview image to obtain a human body boundary frame.

For example, as shown in Fig. 4, after obtaining the preview image G1, the electronic device could utilize a predetermined portrait detection model to perform a portrait detection on the preview image G1 to obtain a human body boundary frame B1.

It should be noted that the electronic device could finish the flow if the electronic device obtains multiple human body boundary frames or no human body boundary frame when the electronic device utilizes the predetermined portrait detection model to perform the portrait detection on the preview image G1.

Block 203: the electronic device cuts the preview image based on the human body boundary frame to obtain a human body image.

For example, as shown in Fig. 5, after obtaining the human body boundary frame B1, the electronic device could cut the preview image along the human body boundary frame B1 to obtain the human body image G2.

**Block** 204: The electronic device utilizes a key point detection model to perform the human body key point detection on the human body image to obtain the key point set of the human body.

For example, after obtaining the human image G2, the electronic device could utilize a predetermined key point detection model to perform the human body key point detection on the human body image G2 to obtain the key point set of the human body. Here, the human body key point set could comprise one or more human body key points, including a nose, a left eye, a right eye, a left ear, a right ear, a neck, a left shoulder, a right shoulder, a left elbow, a right elbow, a left wrist, a right wrist, a left buttock, a right buttock, a left knee, a right knee, a left ankle and a right ankle.

Block 205: The electronic device divides the preview image into a foreground image and a background image.

In this embodiment, before the electronic device obtains the preview image of the photographing scene, the electronic device could obtain multiple image sample and the foreground tag and the background tag of each image sample. And then, the electronic device could utilize multiple image samples and the foreground tag and the background tag of each image sample to a convolutional neural network or other train deep-learning models to get a trained model. This trained model could be used as a predetermined scene identification model.

Here, the foreground tag is used to describe an item that could be identified by a rectangular frame and located in an apparent position of the image sample. The background tag is used to describe an overall information of the image sample. For example, the background tag could be "mountain view", "water view", "snow view", "rain view", etc. The foreground tag could be "human", "cat", "dog", etc. For example, for an image sample with "a person standing by a lake", the foreground tag could be "human" and the background tag could be "water view".

For example, after obtaining the preview image G1, the electronic device could utilize the trained scene identification model to perform the scene identification on the preview image G1 to obtain the foreground tag and the background tag of the preview image G1 such that the electronic device divides the preview image G1 into the foreground image and the background image according to the foreground tag and the background tag. For the preview image G1, the electronic device identifies that the background tag is "mountain view". Then, the background image is a "mountain view" image. In addition, the electronic device identifies that the foreground tag is "human". Then, the foreground image is an image having a "human" in it.

Block 206: the electronic device determines a plurality of candidate key pint sets corresponding to the background image.

It could be understood that in this embodiment, the electronic device could preset a plurality of the predetermined background images and set different candidate key point sets having reasonable compositions for each predetermined background images. Here, the predetermined background images could be a "water view" image, a "mountain view" image, a "snow view" image, etc. Each candidate key point set could comprise one or more human body key points, including a nose, a left eye, a right eye, a left ear, a right ear, a neck, a left shoulder, a right shoulder, a left elbow, a right elbow, a left wrist, a right wrist, a left buttock, a right buttock, a left knee, a right knee, a left ankle and a right ankle.

For example, after dividing the preview image G1 into the foreground image and the background image, the electronic device could obtain a plurality of predetermined background images. And then, the electronic could determine whether the plurality of background images have a predetermined background image matching the background image. When determining that there is one predetermined background image matching the background image, the electronic device could obtain the plurality of the candidate key point sets corresponding to the predetermined background image and take them as the plurality of the candidate key point sets corresponding to the background image.

Block 207: The electronic device determines a human body type of the human body.

Block 208: The electronic device determines at least one of the plurality of candidate key point sets that is corresponding to the human body type as the composition key point set corresponding to the photographing scene.

In this embodiment, when the plurality of candidate key point sets corresponding to the background image are obtained, the electronic device could determine the human body type of the human body in the photographing scene. And then, the electronic device could determine at least one of the plurality of candidate key point sets that is corresponding to the human body type as the composition key point set corresponding to the photographing scene.

It could be understood that when the electronic device sets a plurality of candidate key point sets for each predetermined background image, the electronic device could further set corresponding types for each candidate key point set corresponding to each predetermined background image. For example, if a certain key point set comprises key points higher than a human chest, including a nose, a left eye, a right eye, a left ear, a right ear, a neck, a left shoulder, and a right shoulder, the electronic device could determine that the type corresponding to the candidate key point set is a bust type. If a certain candidate key point set comprises key points of the entire human body, including a nose, a left eye, a right eye, a left ear, a right ear, a neck, a left shoulder, a right shoulder, a left elbow, a right elbow, a left wrist, a right wrist, a left butt, a right butt, a left knee, a right knee, a left ankle and a right ankle, the electronic device could determine that the type of the candidate key point set is a full-length portrait type. After determining the human body type, the electronic device could obtain the type corresponding to each candidate key point set corresponding to the background image to obtain a plurality of types. And then, the electronic device could determine a type matching the human body type from the plurality of types and determine the candidate key point set corresponding to the type matching the human body type as the candidate key point set corresponding to the human body type. For example, assume the human body type is the full-length portrait type and the plurality of types comprise the bust type and the full-length portrait type. Then, the electronic device could determine the candidate key point set corresponding to the full-length portrait type of the plurality of types as the candidate key point set corresponding to the human body type.

**Block** 209: The electronic device calculates a distance between each human body key point and its corresponding composition key point to obtain a plurality of distances.

Block 210: The electronic device calculates an average distance of the plurality of distances.

For example, when the human body key point set and the composition key point set are obtained, the electronic device could calculate a distance between each human body key point and its corresponding composition key point to obtain a plurality of distances. For instance, assume that the human body key point set comprises: a nose N1, a left eye LE1 and a right eye RE1, a left ear LA1, a right ear RA1, and a neck K1. The composition key point set comprises: a nose N2, a left eye LE2 and a right eye RE2, a left ear LA2, a right ear RA2, and a neck K2. The electronic device could calculate a distance L1 between the nose N1 and the nose N2. Assume that the nose N1 is (1, 2), the nose N2 is (3, 3). Then the distance between the nose N1 and the nose N2 is $\sqrt{5}$. Similarly, the electronic device could calculate the distance L2 between the left eye LE1 and the left eye LE2, the distance L3 between the right eye RE1 and the right eye RE2, the distance L4 between the left ear LA1 and the left ear LA2, the distance L5 between the right ear RA1 and the right ear RA2, and the distance L6 between the neck K1 and the neck K2.

After obtaining the distances L1, L2, L3, L4, L5 and L6, the electronic device could calculate the average distance of the distances L1, L2, L3, L4, L5 and L6. For example, assume L1 is $\sqrt{5}$, L2 is $\sqrt{5}$, L3 is 4, L4 is 3, L5 is 2 and L6 is 4. Then the average distance is 3.

Block 211: In response to the average distance being greater than or equal to the predetermined average distance, the electronic device generates and outputs the prompt message to adjust the attitude of the electronic device.

For example, after obtaining the average distance, the electronic device could determine whether the average distance is greater than or equal to the predetermined average distance. Upon a condition that the average distance is greater than or equal to the predetermined average distance, the electronic device generates and outputs the prompt message to adjust the attitude of the electronic device such that the user could adjust the attitude of the electronic device according to the prompt message. In this way, after the attitude of the electronic device is adjusted, the current average distance obtained by the electronic device is less than the predetermined distance. Here, the predetermined distance could be pre-stored in the electronic device.

It could be understood that as the attitude change of the electronic device, the photographing scene changes accordingly. As the change of the photographing scene, the positions of the human body key points in the human body key point set obtained by performing the key point detection on the human body in the photographing scene. As the change of the positions of the human body key points, the distance between each human body key point and its corresponding composition key point changes. As the change of the distance, the average change calculated by the electronic device changes according. This changing average distance is the current average distance.

For example, when the average distance is greater than or equal to the predetermined average distance, the electronic device could generate a plurality of candidate vectors. Here, each of the candidate vectors could comprise its amplitude and direction. For example, a candidate vector could have a one-centimeter amplitude and horizontally right direction. And then, the electronic device could perform the key point detection on the human body in the current photographing scene to obtain the target human body key point set after the user movers the electronic device to the right by one centimeter. For each target human body key point corresponding to each candidate vector, the electronic device could calculate the distance between each target human body key point and its composition key point to obtain a plurality of distances corresponding to each candidate vector. And then, the electronic device could calculate the average distance of plurality of distances corresponding to each candidate vector. At last, the electronic device could determine the candidate vector having an average distance less than the predetermined average distance as the target vector.

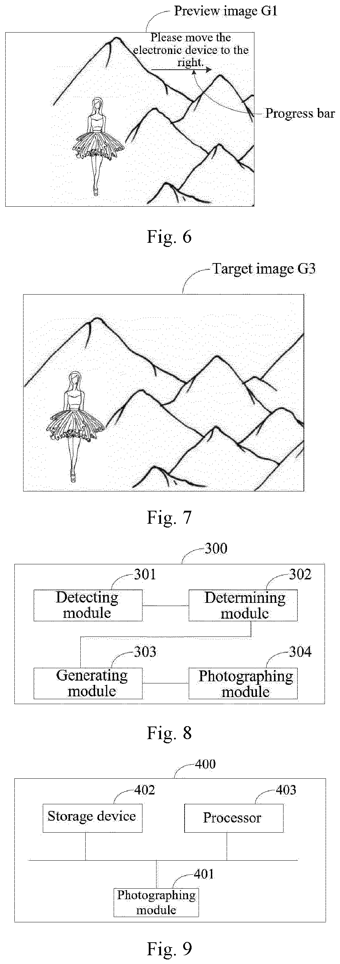

And then, the electronic device could generate and output the prompt message to adjust the attitude of the electronic device according to the target vector. For example, as shown in Fig. 6, assume that the target vector has a one-centimeter amplitude and horizontally right direction. And then, the electronic device could display "Please move the electronic device to the right" in its display screen. Furthermore, the electronic device could further display a progress bar, which corresponds to the above-mentioned one centimeter. The progress bar could gradually become shorter as the electronic device moves to the right and become longer as the electronic device moves to the left. When the electronic device moves to the right by one centimeter, the progress bar is gone. Accordingly, the user could determine whether he has moved the electronic device to the right by one centimeter according to the progress bar.

Block 212: In response to the current average distance being less than the predetermined average distance, the electronic device performs a photographing operation on the photographing scene to obtain a target image.

As shown in Fig. 7, in this embodiment, when the current average distance is less than the predetermined average distance, the electronic device could perform a photographing operation on the photographing scene to obtain an image meeting certain aesthetical rules and having a reasonable composition (the target image G3). Or, when the current average distance is less than the predetermined average distance, the electronic device could generate a prompt message to tell the user to take a picture of the photographing scene. In this way, the user could click the "shot" button in the camera application to take a picture of the photographing scene to obtain a target image that meets certain aesthetical rules.

It could be understood that the electronic device could directly take a picture of the photographing scene when the average distance obtained in step 210 is less than the predetermined average distance to obtain an image meeting certain aesthetical rules and having a reasonable composition.

Please refer to Fig. 8. Fig. 8 is a diagram of a photographing device according to an embodiment of the present disclosure. The photographing device is used in an electronic device. The photographing device 300 comprises a detecting module 301, a determining module 302, a generating module 303, and a photographing module 304.

The detecting module 301 is configured to perform a key point detection on a human body in a photographing scene to obtain a human body key point set of the human body.

The determining module 302 is configured to determine a composition key point set corresponding to the photographing scene.

The generating module 303 is configured to generate and output a prompt message to adjust an attitude of the electronic device upon a condition that the human body key point set does not match the composition key point set.

The photographing module 304 is configured to perform a photographing operation on the photographing scene to obtain a target image upon a condition that the human body key point set matches the composition key point set.

In some embodiments, the detecting module 301 is configured to: obtain a preview image of the photographing scene; to utilize a portrait detection model to perform a portrait detection on the preview image to obtain a human body boundary frame; cut the preview image based on the human body boundary frame to obtain a human body image; and utilize a key point detection model to perform the key point detection on the human body image to obtain the human body key point set of the human body.

In some embodiments, the determining module 302 is configured to: divide the preview image into a foreground image and a background image; determine a plurality of candidate key point sets corresponding to the background image; to determine a human body type of the human body; and to determine, from the plurality of candidate key point sets, at least one of candidate key point sets that is corresponding to the human body type as the composition key point set corresponding to the photographing scene.

In some embodiments, the determining module 302 is configured to: obtain a composition boundary frame according to each of the multiple of candidate key point sets corresponding to the human body type, in response to multiple of the candidate key point sets correspond to the human body type; and to determine at least one of the multiple of candidate key point sets, where the composition boundary frame corresponding to the at least one of the multiple of candidate key point matches the human body boundary frame, as the composite key point set corresponding to the photographing scene.

In some embodiments, the determining module 302 is configured to calculate a distance between each human body key point and its corresponding composition key point to obtain a plurality of distances, and to calculate an average distance of the plurality of distances. The generating module 303 is configured to generate and output a prompt message to adjust an attitude of the electronic device upon a condition that the average distance is greater than or equal to a predetermined average distance.

In some embodiments, the generating module 303 is configured to: generate a plurality of candidate vectors; predict a target human body key point set obtained after adjusting the attitude of the electronic device according to each of the candidate vectors; determine a candidate vector of the plurality of candidate vectors as a target vector, where the target human body key point set corresponding to the candidate vector matches the composition key point set; generate and output the prompt message to adjust the attitude of the electronic device according to the target vector.

In some embodiments, the determining module 302 is configured to: determine a human face key point set from the human body key point set; obtain a horizontal coordinate of each human face key point to obtain a plurality of first horizontal coordinates; calculate a first average value of the plurality of first horizontal coordinates; determine a target composition key point set corresponding to the human face key point set from the composition key point set in response to the first average value being within a predetermined range. The generating module 303 is configured to generate and output a prompt message to adjust an attitude of the electronic device upon a condition that the human face key point set does not matching the target composition key point set.

In some embodiments, the determining module 302 is configured to: obtain a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates; calculate a second average value of the plurality of first vertical coordinates, a third average value of the plurality of first vertical coordinates and a fourth average value of the plurality of second horizontal coordinates; determine a first target coordinate according to the first average value and the second average value and determining a second target coordinate according to the third average value and the fourth average value; calculate a first distance between the first target coordinate and the second target coordinate. The generating module 303 is configured to generate and output a prompt message to adjust an attitude of the electronic device upon a condition that the first distance is greater than or equal to a first predetermined distance.

In some embodiments, the determining module 302 is configured to: detect whether the human body key point set has a predetermined key point in response to the first average not within the predetermined range; obtain a first center coordinate of the human body boundary frame and a second center coordinate of the composition boundary frame corresponding to the composition key point set in response to the human body key point set not having a predetermined key point; calculate a second distance between the first center coordinate and the second center coordinate. The generating module 303 is configured to generate and output a prompt message to adjust an attitude of the electronic device upon a condition that the second distance is greater than or equal to a second predetermined distance.

In some embodiments, the determining module 302 is configured to: obtain a first center horizontal coordinate of the human body boundary frame and a second center horizontal coordinate of the composition boundary frame corresponding to the composition key point set in response to the human key point set having the predetermined key point; determine a target composition key point set corresponding to the human face key point set from the composition key point set; obtain a vertical coordinate of each human face key point to obtain a plurality of third vertical coordinates and obtaining a vertical coordinate of each composition key point to obtain a plurality of fourth vertical coordinates; calculate a fifth average value of the plurality of third vertical coordinates and a sixth average value of the plurality of fourth vertical coordinates; determine a third target coordinate according to the first center horizontal coordinate and the fifth average value and determining a fourth target coordinate according to the second center horizontal coordinate and the sixth average value; calculate a third distance between the third target coordinate and the fourth target coordinate. The generating module 303 is configured to generate and output a prompt message to adjust an attitude of the electronic device upon a condition that the third distance is greater than or equal to a third predetermined distance.

Embodiments of the present disclosure are directed to a non-transitory storage medium storing computer program. A computer executes the computer programs to perform operations as provided in the above photographing method.

According to an embodiment of the present disclosure, an electronic device is disclosed. The electronic device comprises a storage device and a processor. The storage device stores computer program. The processor is configured to execute the computer program stored in the storage device to perform the above-mentioned photographing method.

The above-mentioned electronic device could be a mobile terminal, such as a tablet or a smart phone. Please refer to Fig. 9. Fig. 9 is a diagram of an electronic device according to an embodiment of the present disclosure.

The electronic device 400 comprises a photographing module 401, a storage device 402 and a processor 403. A person having ordinary skills in the art could understand that the structure shown in Fig. 9 is not a limitation of the electronic device. The electronic device could comprise more or less components, or a combination of some components or have a different configuration.

The photographing module 401 comprises a lens, an image sensor, and an image signal processor. The lens is used to collect an external light and to provide the collected light to the image sensor. The image sensor is configured to sense the light signal from the lens and transform the light signal into a digitized raw image (the RAW image) and to provide the RAW image to the image signal processor. The image signal processor could perform a format conversion and a noise reduction on the RAW image to obtain a YUV image. Here, RAW is a format that has not been processed or compressed and could be called "digital film." In addition, YUV is a color format, where Y represents a luminance, U represents a chromaticity, and V represents a concentration. The user could intuitively sense the natural characteristic form the YUV image through his eyes.

The storage device 402 is configured to store application programs and data. The application programs stored in the storage device 402 comprise executable codes. The program codes could form all kinds of functional block. The processor 403 could perform all kinds of functions/application or data processing by executing the application programs in the storage device 402.

The processor 403 is the control center of the electronic device and is connected to the other components in the electronic device through interfaces and buses. The processor 403 executes the application programs stored in the storage device and loads the data stored in the storage device to perform all kinds of functions of the electronic device and process data to monitor the electric device.

In this embodiment, the processor 403 in the electronic device follows the instructions to load the executable program codes of one or more application programs into the storage device and execute the application programs stored in the storage device to perform operations comprising:

performing a key point detection on a human body in a photographing scene to obtain a human body key point set of the human body;

determining a composition key point set corresponding to the photographing scene;

in response to the human body key point set not matching the composition key point set, generating and outputting a prompt message to adjust an attitude of the electronic device; and

in response to the human body key point set matching the composition key point set, performing a photographing operation on the photographing scene to obtain a target image.

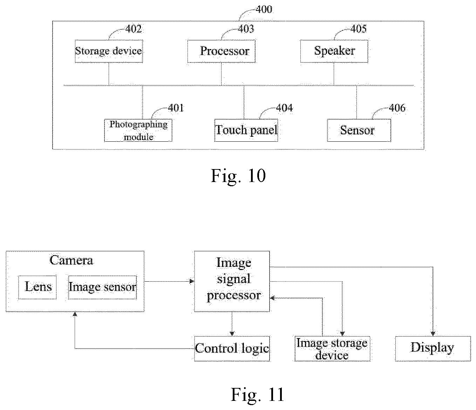

Please refer to Fig. 10. The electronic device could comprise a photographing module 401, a storage device 402, a processor 403, a touch panel 404, a speaker 405, and a sensor 406.

The photographing module 403 could comprise an image processing circuit. The image processing circuit could be implemented with hardware and/or software. The image processing circuit could comprise all kinds of processing units defined as an image signal processing unit. The image processing circuit at least could comprise a camera, an image signal processor (ISP), a control logic, an image storage device and a display. Here, the camera could at least comprise one or more lenses and image sensors. The image sensor could comprise a color filter array (such as Bayer filter). The image sensor could obtain light amplitude and wavelength information captured by each pixel of the image sensor and provide raw image data processed by the image signal processor.

The image signal processor could process the raw image data pixel by pixel according to multiple formats. For example, each pixel could have 8, 10, 12, or 14-bit bit-depth. The image signal processor could perform one or more image processing operations on the raw image data and collect the statistics information of the image data. Here, the image processing operations could be performed according to the same or different bit-depths. After the raw image data are processed by the image signal processor, the processed image data could be stored in the image storage device. The image signal processor could receive the image data from the image storage device.

The image storage device could be a part of a memory, a storage device, or an independent storage device of the electronic device. The image storage device could have direct memory access (DMA) characteristic.

When receiving the image data from the image storage device, the image signal processor could perform one or more image processing operations, such as a time-domain filtering. The processed image data could be sent to the image storage device for further process before being displayed. The image signal processor could further receive the processed data from the image storage device and perform the image data processing on the processed in the original domain and RGB/YCbCr color spaces. The processed image data could be outputted to the display for the user's view and/or for a graphic engine/graphic processing unit (GPU) for further processing. In addition, the output of the image signal processor could be sent to the image storage device and the display could read the image data from the image storage device. In an embodiment, the image storage device could be implemented with one or more frame buffers.

The statistic data determined by the image signal processor could be sent to the control logic. For example, the statistic data could comprise auto exposure, auto white balance, auto focus, flash detection, black voltage level compensation, lens shadow calibration of the image sensor.

The control logic could comprise a processor and/or a microcontroller that executes one or more routines (such as firmware). The one or more routines could determine the control parameters of the camera and the ISP control parameters according to the received statistics data. For example, the control parameters of the camera could comprises a camera flash control parameter, lens control parameters (such as focusing or zooming focal distances), or a combination of the parameters. The ISP control parameters could be used for gain level and color adjustment array for auto white balance and color adjustment (for example, during RGB processing period).

Please refer to Fig. 11. Fig. 11 is a diagram of an image processing circuit according to an embodiment of the present disclosure. As shown in Fig. 11, for simple illustration, only the components related to the image processing technique are shown in this embodiment.

For example, the image processing circuit could comprise a camera, a image signal processor, a control logic, an image storage device and a display. Here, the camera could comprise one or more lens and image sensors. In some embodiments, the camera could be one of a long focal camera or a wide-angle camera.

The first image collected by the camera is transferred to the image signal processor for processing. After the image signal processor processes the first image, the statistic data of the first image (such as the luminance, the contrast and the color of the image) could be sent to the control logic. The control logic could determine the control parameters of the camera according to the statistic data such that the camera could perform auto focusing and auto exposure operations according to the control parameters. After the image signal processor processes the first image, the processed first image could be stored in the image storage device. The image signal processor could read the image stored in the image storage device for further processing. In addition, the processed first image could be directly transferred to the display for displaying. The display could read the image stored in the image storage device for displaying.

Furthermore, although not shown in Fig. 11, the electronic device could further comprise a CPU and a power module. The CPU is connected to the control logic, the image signal processor, the image storage device and the display. The CPU is used to achieve the overall control. The power module is used to provide power to all modules.

The application programs stored in the storage device 402 comprise executable codes. The application programs could form all kinds of functional blocks. The processor 403 could execute the application programs stored in the storage device 402 to perform all functions and data processing.

The processor 403 is the control center of the electronic device and is connected to the other components in the electronic device through interfaces and buses. The processor 403 executes the application programs stored in the storage device 402 and loads the data stored in the storage device 402 to perform all kinds of functions of the electronic device and process data to monitor the electric device.

The touch panel 404 could be used to receive the touch control performed by the user on the electronic device. The speaker 405 could play the audio signals. The sensor 406 could comprise a gyroscope, an acceleration sensor, a direction sensor, and an electromagnetic sensor, for obtaining the current attitude of the electronic device 400.

In this embodiment, the processor 403 in the electronic device follows the instructions to load the executable program codes of one or more application programs into the storage device 402 and execute the application programs stored in the storage device 402 to perform operations comprising:

performing a key point detection on a human body in a photographing scene to obtain a human body key point set of the human body;

determining a composition key point set corresponding to the photographing scene;

in response to the human body key point set not matching the composition key point set, generating and outputting a prompt message to adjust an attitude of the electronic device;

in response to the human body key point set matching the composition key point set, performing a photographing operation on the photographing scene to obtain a target image.

Optionally, the operation of performing the key point detection on the human body in the photographing scene to obtain the key point set of the human body comprises: obtaining a preview image of the photographing scene; utilizing a portrait detection model to perform a portrait detection on the preview image to obtain a human body boundary frame; cutting the preview image based on the human body boundary frame to obtain a human body image; and utilizing a key point detection model to perform the key point detection on the human body image to obtain the human body key point set of the human body.

Optionally, the operation of determining the composition key point set corresponding to the photographing scene comprises: dividing the preview image into a foreground image and a background image; determining a plurality of candidate key point sets corresponding to the background image; determining a human body type of the human body; and determining, from the plurality of candidate key point sets, at least one of candidate key point sets that is corresponding to the human body type as the composition key point set corresponding to the photographing scene.

Optionally, the operations further comprise: in response to multiple of the candidate key point sets correspond to the human body type, obtaining a composition boundary frame according to each of the multiple of candidate key point sets corresponding to the human body type; and determining at least one of the multiple of candidate key point sets, where the composition boundary frame corresponding to the at least one of the multiple of candidate key point matches the human body boundary frame, as the composite key point set corresponding to the photographing scene.

Optionally, after the operation of determining the composition key point set corresponding to the photographing scene, the operations further comprise: calculating a distance between each human body key point and its corresponding composition key point to obtain a plurality of distances; and calculating an average distance of the plurality of distances. The processor 403 also performs an operation of generating and outputting a prompt message to adjust an attitude of the electronic device in response to the average distance being greater than or equal to a predetermined average distance.

Optionally, the operation of generating and outputting the prompt message to adjust the attitude of the electronic device comprises: generating a plurality of candidate vectors; predicting a target human body key point set obtained after adjusting the attitude of the electronic device according to each of the candidate vectors; determining a candidate vector of the plurality of candidate vectors as a target vector, where the target human body key point set corresponding to the candidate vector matches the composition key point set. The processor 403 also performs an operation of generating and outputting the prompt message to adjust the attitude of the electronic device according to the target vector.

Optionally, after the operation of determining the composition key point set corresponding to the photographing scene, the operations further comprise: determining a human face key point set from the human body key point set; obtaining a horizontal coordinate of each human face key point to obtain a plurality of first horizontal coordinates; calculating a first average value of the plurality of first horizontal coordinates; in response to the first average value being within a predetermined range, determining a target composition key point set corresponding to the human face key point set from the composition key point set. The processor 403 also performs an operation of generating and outputting a prompt message to adjust an attitude of the electronic device in response to the human face key point set not matching the target composition key point set.

Optionally, after the operation of determining the target composition key point set corresponding to the human face key point set from the composition key point set, the operations further comprise: obtaining a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates; calculating a second average value of the plurality of first vertical coordinates, a third average value of the plurality of first vertical coordinates and a fourth average value of the plurality of second horizontal coordinates; determining a first target coordinate according to the first average value and the second average value and determining a second target coordinate according to the third average value and the fourth average value; calculating a first distance between the first target coordinate and the second target coordinate. The processor 403 also performs an operation of generating and outputting a prompt message to adjust an attitude of the electronic device in response to the first distance being greater than or equal to a first predetermined distance.

Optionally, after the operation of calculating the first average value of the plurality of horizontal coordinates, the operation further comprise: in response to the first average not within the predetermined range, detecting whether the human body key point set has a predetermined key point; in response to the human body key point set not having a predetermined key point, obtaining a first center coordinate of the human body boundary frame and a second center coordinate of the composition boundary frame corresponding to the composition key point set; calculating a second distance between the first center coordinate and the second center coordinate. The processor 403 also performs an operation of generating and outputting a prompt message to adjust an attitude of the electronic device in response to the second distance being greater than or equal to a second predetermined distance.

Optionally, after the operation of detecting whether the human body key point set has the predetermined key point, the operations further comprise: in response to the human key point set having the predetermined key point, obtaining a first center horizontal coordinate of the human body boundary frame and a second center horizontal coordinate of the composition boundary frame corresponding to the composition key point set; determining a target composition key point set corresponding to the human face key point set from the composition key point set; obtaining a vertical coordinate of each human face key point to obtain a plurality of third vertical coordinates and obtaining a vertical coordinate of each composition key point to obtain a plurality of fourth vertical coordinates; calculating a fifth average value of the plurality of third vertical coordinates and a sixth average value of the plurality of fourth vertical coordinates; determining a third target coordinate according to the first center horizontal coordinate and the fifth average value and determining a fourth target coordinate according to the second center horizontal coordinate and the sixth average value; calculating a third distance between the third target coordinate and the fourth target coordinate. The processor 403 also performs an operation of generating and outputting a prompt message to adjust an attitude of the electronic device in response to the third distance being greater than or equal to a third predetermined distance.

In the above-mentioned embodiments, the description of each embodiment has its own emphasis. For parts that are not described in detail in a certain embodiment, reference may be made to the detailed description of the photographing method above, which will not be repeated here.

The photographing device according to an embodiment of the present disclosure and the above-mentioned photographing method belong to the same concept. The photographing device could perform photographing method in any of the above embodiments. The actual implementation could be referred to the embodiments of the photographing method and further illustration is omitted here.

Please note, a person having ordinary skills in the art could understand that a step or more steps in the above-mentioned photographing method could be achieved by using a computer program to control related hardware. The computer program could be stored in a computer readable medium, such as a memory. The computer program could be executed by at least one processor to perform one or more steps in the photographing method. The storage medium could be a hard disk, an optical disk, a read only memory (ROM) or a random access memory (RAM).

In addition, the functional units in the various embodiments of the present disclosure may be integrated into a processing module, or each unit may be physically present individually, or two or more units may be integrated into one module. The above integrated module may be implemented by using hardware, or may be implemented by using a software function module. The integrated module may be stored in a computer readable storage medium if it is implemented by a software function module and is sold or used as a standalone product. The above-mentioned storage medium may be a read-only memory, a magnetic disk, or an optical disk.

Above are embodiments of the present disclosure, which does not limit the scope of the present disclosure. Any modifications, equivalent replacements or improvements within the spirit and principles of the embodiment described above should be covered by the protected scope of the disclosure.

**Claims**

1. A photographing method, used in an electronic device, the photographing method comprising:

   performing a key point detection on a human body in a photographing scene to obtain a human body key point set of the human body;
   determining a composition key point set corresponding to the photographing scene;
   in response to the human body key point set not matching the composition key point set, generating and outputting a prompt message to adjust an attitude of the electronic device; and
   in response to the human body key point set matching the composition key point set, performing a photographing operation on the photographing scene to obtain a target image.

2. The photographing method of claim 1, wherein the step of performing the key point detection on the human body in the photographing scene to obtain the key point set of the human body comprises:

   obtaining a preview image of the photographing scene;
   utilizing a portrait detection model to perform a portrait detection on the preview image to obtain a human body boundary frame;
   cutting the preview image based on the human body boundary frame to obtain a human body image; and
   utilizing a key point detection model to perform the key point detection on the human body image to obtain the human body key point set of the human body.

3. The photographing method of claim 2, wherein the step of determining the composition key point set corresponding to the photographing scene comprises:

   dividing the preview image into a foreground image and a background image;
   determining a plurality of candidate key point sets corresponding to the background image;
   determining a human body type of the human body; and
   determining, from the plurality of candidate key point sets, at least one of candidate key point sets that is corresponding to the human body type as the composition key point set corresponding to the photographing scene.

4. The photographing method of claim 3, further comprising:

   in response to multiple of the candidate key point sets correspond to the human body type, obtaining a composition boundary frame according to each of the multiple of candidate key point sets corresponding to the human body type; and
   determining at least one of the multiple of candidate key point sets, where the composition boundary frame corresponding to the at least one of the multiple of candidate key point matches the human body boundary frame, as the composite key point set corresponding to the photographing scene.

5. The photographing method of claim 1, wherein after the step of determining the composition key point set corresponding to the photographing scene, the photographing method further comprises:

   calculating a distance between each human body key point and its corresponding composition key point to obtain a plurality of distances; and
   calculating an average distance of the plurality of distances;
   wherein the human body key point set not matching the composition key point set comprises: the average distance being greater than or equal to a predetermined average distance.

**6.** The photographing method of claim 5, wherein the step of generating and outputting the prompt message to adjust the attitude of the electronic device comprises:

generating a plurality of candidate vectors;
predicting a target human body key point set obtained after adjusting the attitude of the electronic device according to each of the candidate vectors;
determining a candidate vector of the plurality of candidate vectors as a target vector, wherein the target human body key point set corresponding to the candidate vector matches the composition key point set; and
generating and outputting the prompt message to adjust the attitude of the electronic device according to the target vector.

**7.** The photographing method of claim 1, wherein after the step of determining the composition key point set corresponding to the photographing scene, the photographing method further comprises:

determining a human face key point set from the human body key point set;
obtaining a horizontal coordinate of each human face key point to obtain a plurality of first horizontal coordinates;
calculating a first average value of the plurality of first horizontal coordinates; and
in response to the first average value being within a predetermined range, determining a target composition key point set corresponding to the human face key point set from the composition key point set;
wherein the human body key point set not matching the composition key point set comprises: the human face key point set not matching the target composition key point set.

**8.** The photographing method of claim 7, wherein after the step of determining the target composition key point set corresponding to the human face key point set from the composition key point set, the photographing method further comprises:

obtaining a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates;
calculating a second average value of the plurality of first vertical coordinates, a third average value of the plurality of first vertical coordinates and a fourth average value of the plurality of second horizontal coordinates;
determining a first target coordinate according to the first average value and the second average value and determining a second target coordinate according to the third average value and the fourth average value; and
calculating a first distance between the first target coordinate and the second target coordinate;
wherein the human body key point set not matching the composition key point set comprises: the first distance being greater than or equal to a first predetermined distance.

**9.** The photographing method of claim 7, wherein after the step of calculating the first average value of the plurality of horizontal coordinates, the photographing method further comprises:

in response to the first average not within the predetermined range, detecting whether the human body key point set has a predetermined key point;
in response to the human body key point set not having a predetermined key point, obtaining a first center coordinate of the human body boundary frame and a second center coordinate of the composition boundary frame corresponding to the composition key point set; and
calculating a second distance between the first center coordinate and the second center coordinate;
wherein the human body key point set not matching the composition key point set comprises: the second distance being greater than or equal to a second predetermined distance.

**10.** The photographing method of claim 9, wherein after the step of detecting whether the human body key point set has the predetermined key point, the photographing method further comprises:

in response to the human key point set having the predetermined key point, obtaining a first center horizontal coordinate of the human body boundary frame and a second center horizontal coordinate of the composition boundary frame corresponding to the composition key point set;
determining a target composition key point set corresponding to the human face key point set from the composition key point set;
obtaining a vertical coordinate of each human face key point to obtain a plurality of third vertical coordinates and obtaining a vertical coordinate of each composition key point to obtain a plurality of fourth vertical coordinates;
calculating a fifth average value of the plurality of third vertical coordinates and a sixth average value of the plurality of fourth vertical coordinates;

determining a third target coordinate according to the first center horizontal coordinate and the fifth average value and determining a fourth target coordinate according to the second center horizontal coordinate and the sixth average value; and

calculating a third distance between the third target coordinate and the fourth target coordinate; wherein the human body key point set not matching the composition key point set comprises: the third distance being greater than or equal to a third predetermined distance.

11. A photographing device, used in an electronic device, comprising:

a detecting module, configured to perform a key point detection on a human body in a photographing scene to obtain a human body key point set of the human body;
a determining module, configured to determine a composition key point set corresponding to the photographing scene;
a generating module, configured to generate and output a prompt message to adjust an attitude of the electronic device upon a condition that the human body key point set does not match the composition key point set; and
a photographing module, configured to perform a photographing operation on the photographing scene to obtain a target image upon a condition that the human body key point set matches the composition key point set.

12. A storage medium, storing computer program executable by a computer to perform the photographing method of claim 1.

13. An electronic device, comprising a processor and a storage device storing computer program, wherein the processor is configured to execute the computer program stored in the storage device to:

perform a key point detection on a human body in a photographing scene to obtain a human body key point set of the human body;
determine a composition key point set corresponding to the photographing scene;
in response to the human body key point set not matching the composition key point set, generate and output a prompt message to adjust an attitude of the electronic device; and
in response to the human body key point set matching the composition key point set, perform a photographing operation on the photographing scene to obtain a target image.

14. The electronic device of claim 13, wherein the processor is configured to further execute the computer program to:

obtain a preview image of the photographing scene;
utilize a portrait detection model to perform a portrait detection on the preview image to obtain a human body boundary frame;
cut the preview image based on the human body boundary frame to obtain a human body image; and
utilize a key point detection model to perform the key point detection on the human body image to obtain the human body key point set of the human body.

15. The electronic device of claim 14, wherein the processor is configured to further execute the computer program to:

divide the preview image into a foreground image and a background image;
determine a plurality of candidate key point sets corresponding to the background image;
determine a human body type of the human body; and
determine, from the plurality of candidate key point sets, at least one of candidate key point sets that is corresponding to the human body type as the composition key point set corresponding to the photographing scene.

16. The electronic device of claim 15, wherein the processor is configured to further execute the computer program to:

in response to multiple of the candidate key point sets correspond to the human body type, obtain a composition boundary frame according to each of the multiple of candidate key point sets corresponding to the human body type; and
determine at least one of the multiple of candidate key point sets, where the composition boundary frame corresponding to the at least one of the multiple of candidate key point matches the human body boundary frame, as the composite key point set corresponding to the photographing scene.

17. The electronic device of claim 13, wherein the processor is configured to further execute the computer program to:

calculate distances between each human body key point and its corresponding composition key point;
calculate an average distance of the distances;

and

in response to the average distance being greater than or equal to a predetermined average distance, generate and output a prompt message to adjust an attitude of the electronic device.

18. The electronic device of claim 17, wherein the processor is configured to further execute the computer program to:

generate a plurality of candidate vectors;
predict a target human body key point set obtained after adjusting the attitude of the electronic device according to each of the candidate vectors;
determine a candidate vector of the plurality of candidate vectors as a target vector, wherein the target human body key point set corresponding to the candidate vector matches the composition key point set; and
generate and outputting the prompt message to adjust the attitude of the electronic device according to the target vector.

19. The electronic device of claim 13, wherein the processor is configured to further execute the computer program to:

determine a human face key point set from the human body key point set;
obtain a horizontal coordinate of each human face key point to obtain a plurality of first horizontal coordinates;
calculate a first average value of the plurality of first horizontal coordinates;
in response to the first average value being within a predetermined range, determine a target composition key point set corresponding to the human face key point set from the composition key point set; and
in response to the human face key point set not matching the target composition key point set, generate and output a prompt message to adjust an attitude of the electronic device.

20. The electronic device of claim 19, wherein the processor is configured to further execute the computer program to:

obtain a vertical coordinate of each human key point to obtain a plurality of first vertical coordinates and obtaining a horizontal coordinate and a vertical coordinate of each target composition key point to obtain a plurality of first vertical coordinates and a plurality of second horizontal coordinates;
calculate a second average value of the plurality of first vertical coordinates, a third average value of the plurality of first vertical coordinates and a fourth average value of the plurality of second horizontal coordinates;
determine a first target coordinate according to the first average value and the second average value and determining a second target coordinate according to the third average value and the fourth average value;
calculate a first distance between the first target coordinate and the second target coordinate; and
in response to the first distance being greater than or equal to a first predetermined distance, generate and outputting a prompt message to adjust an attitude of the electronic device.

| Perform a key point detection on a human body in a photographing scene to obtain a human body key point set of the human body. | — 101 |

↓

| Determine a composition key point set corresponding to the photographing scene. | — 102 |

↓

| In response to the human body key point set not matching the composition key point set, generate and output a prompt message to adjust an attitude of the electronic device. | — 103 |

↓

| In response to the human body key point set matching the composition key point set, perform a photographing operation on the photographing scene to obtain a target image. | — 104 |

Fig. 1

Electronic device obtains a preview image of a photographing scene. — 201

The electronic device utilizes a portrait detection model to perform a portrait detection on the preview image to obtain a human body boundary frame. — 202

The electronic device cuts the preview image based on the human body boundary frame to obtain a human body image. — 203

The electronic device utilizes a key point detection model to perform the human body key point detection on the human body image to obtain the key point set of the human body. — 204

The electronic device divides the preview image into a foreground image and a background image. — 205

The electronic device determines a plurality of candidate key pint sets corresponding to the background image. — 206

The electronic device determines a human body type of the human body. — 207

The electronic device determines at least one of the plurality of candidate key point sets that is corresponding to the human body type as the composition key point set corresponding to the photographing scene. — 208

The electronic device calculates a distance between each human body key point and its corresponding composition key point to obtain a plurality of distances. — 209

The electronic device calculates an average distance of the plurality of distances. — 210

In response to the average distance being greater than or equal to the predetermined average distance, the electronic device generates and outputs the prompt message to adjust the attitude of the electronic device. — 211

In response to the current average distance being less than the predetermined average distance, the electronic device performs a photographing operation on the photographing scene to obtain a target image. — 212

Fig. 2

Preview image G1

Fig. 3

Human body boundary frame B1

Preview image G1

Fig. 4

Human body image G2

Fig. 5

Preview image G1

Please move the electronic device to the right.

Progress bar

Fig. 6

Target image G3

Fig. 7

300

301
Detecting module

302
Determining module

303
Generating module

304
Photographing module

Fig. 8

400

402
Storage device

403
Processor

401
Photographing module

Fig. 9

400

402                              403                              405

| Storage device | Processor | Speaker |

401                              404                              406

| Photographing module | Touch panel | Sensor |

Fig. 10

| Camera | | Image signal processor | | | Display |
| Lens | Image sensor | | | | |

| | Control logic | Image storage device | |

Fig. 11

| | | |
|---|---|---|
| **INTERNATIONAL SEARCH REPORT** | International application No. | |
| | **PCT/CN2020/142422** | |

**A. CLASSIFICATION OF SUBJECT MATTER**

H04N 5/232(2006.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNKI, CNTXT, VEN, USTXT, WOTXT, EPTXT: 拍摄, 成像, 拍照, 构图, 布局, 提示, 提醒, 引导, 指引, 图像, 前景, 背景, 人, 姿态, 体型, 人体类型, 关键点, 骨骼, 人体, 场景, 边界框, 距离, 调整, 坐标, 脸, image, composition, human, body, face, background, shoot, photograph, layout, point, camera, prompt, clue, pose, gesture, key, scene, box, distance, adjust, coordinate

**C. DOCUMENTS CONSIDERED TO BE RELEVANT**

| Category* | Citation of document, with indication, where appropriate, of the relevant passages | Relevant to claim No. |
|---|---|---|
| Y | CN 109660719 A (VIVO COMMUNICATION TECHNOLOGY CO., LTD.) 19 April 2019 (2019-04-19)<br>description paragraphs 0026-0074, 0108-0112 | 1, 2, 5-8, 11-14, 17-20 |
| Y | CN 107426489 A (BEIJING XIAOMI MOBILE SOFTWARE CO., LTD.) 01 December 2017 (2017-12-01)<br>description paragraphs 0060-0090 | 1, 2, 5-8, 11-14, 17-20 |
| PX | CN 111277751 A (GUANGDONG OPPO MOBILE TELECOMMUNICATIONS CORP., LTD.) 12 June 2020 (2020-06-12)<br>claims 1-13 | 1-20 |
| A | CN 105100625 A (SOUTH CHINA UNIVERSITY OF TECHNOLOGY) 25 November 2015 (2015-11-25)<br>entire document | 1-20 |
| A | CN 108289174 A (NUBIA TECHNOLOGY CO., LTD.) 17 July 2018 (2018-07-17)<br>entire document | 1-20 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 March 2021** | **29 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2020/142422** |

**C.     DOCUMENTS CONSIDERED TO BE RELEVANT**

| Category* | Citation of document, with indication, where appropriate, of the relevant passages | Relevant to claim No. |
|---|---|---|
| A | CN 109472198 A (WUHAN INSTITUTE OF TECHNOLOGY) 15 March 2019 (2019-03-15) entire document | 1-20 |
| A | JP 2014236334 A (NIKON CORPORATION) 15 December 2014 (2014-12-15) entire document | 1-20 |
| A | US 2013155293 A1 (LEE YUN-GU et al.) 013)6.0. (013)-60) entire document | 1-20 |

Form PCT/ISA/210 (second sheet) (January 2015)

**INTERNATIONAL SEARCH REPORT**
Information on patent family members

International application No.

**PCT/CN2020/142422**

| Patent document cited in search report | | | Publication date (day/month/year) | Patent family member(s) | | | Publication date (day/month/year) |
|---|---|---|---|---|---|---|---|
| CN | 109660719 | A | 19 April 2019 | None | | | |
| CN | 107426489 | A | 01 December 2017 | None | | | |
| CN | 111277751 | A | 12 June 2020 | None | | | |
| CN | 105100625 | A | 25 November 2015 | CN | 105100625 | B | 12 June 2018 |
| CN | 108289174 | A | 17 July 2018 | None | | | |
| CN | 109472198 | A | 15 March 2019 | None | | | |
| JP | 2014236334 | A | 15 December 2014 | None | | | |
| US | 2013155293 | A1 | 20 June 2013 | US | 9225947 | B2 | 29 December 2015 |
| | | | | KR | 20130069123 | A | 26 June 2013 |
| | | | | KR | 101867051 | B1 | 14 June 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010075364